Europäisches Patentamt

European Patent Office

Office européen des brevets

(11) Publication number: **0 136 358**
**B1**

(12) EUROPEAN PATENT SPECIFICATION

(45) Date of publication of patent specification: **31.01.90**

(21) Application number: **84900752.1**

(22) Date of filing: **10.02.84**

(86) International application number:
**PCT/JP84/00041**

(87) International publication number:
**WO 84/03067 16.08.84 Gazette 84/20**

(51) Int. Cl.⁵: **B 29 D 9/00, B 32 B 25/10,**
**B 32 B 27/00, C 08 J 5/12**

(54) PROCESS FOR PRODUCING BONDED COMPOSITE.

(30) Priority: **10.02.83 JP 20909/83**

(43) Date of publication of application:
**10.04.85 Bulletin 85/15**

(45) Publication of the grant of the patent:
**31.01.90 Bulletin 90/05**

(84) Designated Contracting States:
**DE FR GB**

(56) References cited:
**JP-A-51 139 854**
**JP-A-54 048 853**
**JP-B-52 048 146**
**JP-B-55 021 782**
**JP-B-55 041 702**
**JP-B-56 009 183**
**JP-B-57 005 836**

(73) Proprietor: **Toray Silicone Co., Ltd.**
**8 Nihonbashi-muromachi 2-chome**
**Chuo-ku Tokyo 103 (JP)**

(72) Inventor: **MINE, Katsutoshi**
**7-20-2, Aobadai Ichihara-shi**
**Chiba 299-01 (JP)**
Inventor: **MORITA, Yoshitsugu**
**1-6, Yushudai-nishi Ichihara-shi**
**Chiba 299-01 (JP)**

(74) Representative: **Ritter, Stephen David et al**
**Mathys & Squire 10 Fleet Street**
**London EC4Y 1AY (GB)**

## Description

The present invention relates to a process for producing a bonded composite. More particularly, the invention relates to a process for producing a bonded composite of a specified cured product of addition reaction-curable organopolysiloxane and a solid substance.

Generally, an organopolysiloxane composition which is cured through an addition reaction between a lower alkenyl group bonded to a silicon atom and a hydrogen atom bonded to a silicon atom has only poor adhesion to other materials. To bond such an organopolysiloxane composition to another material, the surface of the material must be treated with a primer before it is contacted with the organopolysiloxane composition, and the composition is cured after the contact to bond them together in the prior art. However, the treatment with the primer invites various disadvantages. Recently, there has been proposed an organopolysiloxane composition curable through an addition reaction between a lower alkenyl group bonded to a silicon atom and a hydrogen atom bonded to a silicon atom, which composition exhibits an excellent adhesion without any previous treatment of the surface of an adherend with a primer as disclosed in the specifications of Japanese Patent Publications Nos 48146/1977, 9183/1981 and 5836/1981. Such an addition reaction-curable organopolysiloxane composition is generally a one-component or two-component liquid which cures and adheres at room temperature or by relatively slight heating. Therefore, said composition is usable as a coating material, casting material, impregnating material or adhesive and bonded composites of various shapes have been obtained.

However, because said composition is liquid, it is difficult in practice to coat only a specified, small part and it often exerts unfavorable influences on the surroundings. For example, the fluid composition spreads over a part which is not to be coated or which should not be coated. Further, a low-molecular organopolysiloxane in the composition is scattered into the surroundings to stain the latter in the step of curing by heating and, therefore, problems such as a reduction in insulating power or poor adhesion to another material are posed. Examples of processes which have been employed to prevent such staining include a process wherein the amount of the composition to be applied and the application area are controlled precisely, a process wherein parts other than the surface to be coated are masked with a masking tape, a process wherein a dam is provided for preventing superfluous spread and a process wherein the low molecular weight organopolysiloxane is washed away with a solvent or a gas or the unnecessary silicone is removed by decomposition after the curing of the composition. However, these conventional processes are disadvantageous in that expensive precision apparatuses are required, complicated steps are necessitated, the coated surface is damaged by the after-treatment and some adherends have a shape or structure which cannot be easily protected from the staining.

An object of the present invention is to provide a process for producing a firmly bonded composite comprising a cured product of an addition reaction-curable organopolysiloxane and a solid substance wherein only that part of the surface of the solid substance which is to be coated with the cured product can be coated and the surroundings are not stained with a low molecular weight organopolysiloxane.

Thus according to the present invention there is provided a process for producing a bonded composite of a cured organopolysiloxane and a solid substance characterised in that a cured product obtained by curing an addition reaction-curable organopolysiloxane containing 0.05 to 20 wt% based on the cured product of a silicon atom-bonded hydrolyzable group is kept in contact with the solid substance at room temperature or a higher temperature.

The term "cured product" used herein refers to a cured silicone obtained by an additon reaction between an alkenyl group bonded to a silicon atom and a hydrogen atom bonded to a silicon atom.

A typical example of the cured product is a product obtained by leaving a composition to stand at room temperature or by heating the composition to cure the same, which composition comprises (a) an organopolysiloxane containing at least two silicon atom-bonded alkenyl groups in the molecule, (b) man organopolysiloxane containing at least two silicon atom-bonded hydrogen atoms in the molecule (with the average of the total number of silicon atom-bonded alkenyl groups in the molecule of the component (a) and the silicon atom-bonded hydrogen atoms in the molecule of the component (b) preferably being at least 4.1) and (c) a platinum catalyst. Other examples of the cured products are the same one as above except that the organopolysiloxane used as the component (a) or (b) is replaced with an organosilane and the same one as above except that the patinum catalyst used as the component (c) is replaced with another additon reaction catalyst.

The silicon atom-bonded hydrolyzable group contained in an amount of 0.05 to 20 wt.% in the cured product may be that of an organosilicon compound contained in its free form in said cured product or that of a polysiloxane constituting said cured product.

Irrespectively of the type, the amount of the silicon atom-bonded hydrolyzable groups in the cured product is 0.05 to 20 wt.%, preferably 0.1 to 10 wt.% based on the cured product, because when this amount is smaller than 0.05 wt.%, no sufficient adhesive power can be obtained and when it exceeds 20 wt.%, the effects are not more improved. The cured product in which the silicon atom-bonded hydrolyzable group is contained in the organosilicon compound in free form contained in said cured organopolysiloxane product (type A) is obtained by leaving a composition to stand at room temperature or by heating it, which composition comprises the above mentioned components (a), (b), (c) and an organosilicon compound (d) having at least one silicon atom-bonded hydrolyzable group in the molecule but free from any silicon atom-bonded alkenyl group or silicon atom-bonded hydrogen atom. Alternatively, it is obtained by curing the composition comprising the above-mentioned components (a), (b) and (c) by leaving it to stand at room temperature or by heating it and then applying an organosilicon compound (e) having at least one silicon atom-bonded hydrolyzable group, and optionally a silicon atom-bonded alkenyl group or a silicon atom-bonded hydrogen atom in the molecule thereto or impregnating the former with the latter.

The organopolysiloxane having at least two silicon atom-bonded alkenyl groups in the molecule of component (a) constituting the cured product of type A is subjected to an addition reaction with the component (b) by a catalytic effect of the component (c) to form a cross-linked product in the form of a gel-like, rubbery or rigid resin-like.

The molecular shape may be any of linear, branched linear, cyclic, reticulate and three-dimensional shapes. The polymer may be either a homopolymer or a copolymer. As for the degree of the polymerization, the products range from an oligomer to a high polymer including a 10,000-mer. The product is preferably in liquid form or raw rubber-like form at room temperature.

The alkenyl groups include, for example, vinyl, allyl, 1-propenyl and isopropenyl groups, among which a vinyl group is preferred. Preferably at least two alkenyl groups are present in the molecule of the organopolysiloxane. The positions of the alkeny groups are not particularly limited, though it is preferred that they are positioned apart from each other as far as possible. For example, the alkenyl groups are positioned preferably at both ends of the organopolysiloxane. Other organic groups include, for example, methyl, ethyl, n-propyl, octyl, cyclohexyl, phenyl and 3,3,3-trifluoropropyl groups.

At least 50 molar % of the organic groups other than the alkenyl groups comprises methyl groups. When a phenyl group is present, its amount is preferably up to 30 molar % based on the total organic groups and the maximum is 10 molar %. A small amount of the silicon atom-bonded hydroxyl group may also be present.

The organopolysiloxane having at least two silicon atom-bonded hydrogen atoms in the molecule of component (b) constituting the cured product of type A is subjected to an addition reaction with the component (a) by a catalytic effect of the component (c) to form a cross-linked product in the form of a gel-like, rubber or rigid product-like. The molecular shape may be any of linear, branched-linear, cyclic, reticulate and three-dimensional shapes. The polymer may be either a homopolymer or a copolymer. As for the degree of the polymerization, the products range from a dimer to a high polymer including a 5,000-mer. Preferably at least two silicon atom-bonded hydrogen atoms are present in the molecule of the organopolysiloxane. The positions of the hydrogen atoms are not particularly limited. However, it is preferred that they are positioned apart from each other as far as possible. A reason why the total number of the silicon atom-bonded lower alkenyl groups in the molecule of the component (a) and the silicon atom-bonded hydrogen atoms in the molecule of the component (b) is preferably controlled to at least 4.1 on average is that the state of the resulting, cured product is excellent under such a condition. The organic groups include, for example, methyl, ethyl, n-propyl, octyl, cyclohexyl, phenyl, tolyl, 3,3,3-trifluoropropyl, benzyl, p-chlorophenyl and cyanoethyl groups.

Preferably, at least 50 molar % of the organic groups comprise methyl groups.

To realize a suitable, cured state, it is preferred to use the component (b) in an amount (parts by weight) satisfying the following equation:

[Equivalent of the silicon atom-bonded hydrogen atoms in component (b)] / [equivalent of the silicon atom-bonded lower alkenyl groups in the component (a)] = 0.3/1 to 6/1 for 100 parts by weight of the component (a).

The component (c) is a catalyst for the addition reaction between the silicon atom-bonded lower alkenyl group in the component (a) and the silicon atom-bonded hydrogen atom in the component (b). The components (c) include, for example, finely pulverised platinum element, finely pulverized platinum dispersed on a carbon powder, platinum black, chloroplatinic acid, a complex salt of platinum with an olefin, platinum bis(acetylacetonate), tetrakis(triphenylphosphine)-palladium, a mixture of palladium black and triphenylphosphine and a rhodium catalyst. The component (c) is used in a so-called catalytic amount. When the component (c) is a platinum compound, it is used preferably in an amount of 0.1 to 100 parts by weight (in terms of platinum) for million parts by weight of the cured silicon product.

The organosilicon compound (d) containing at least one silicon atom-bonded hydrolyzable group in the molecule but free of the silicon atom-bonded alkenyl group or silicon atom-bonded hydrogen atom is used for making the cured silicone product adherent to the solid substance. The silicon atom-bonded hydrolyzable groups include, for example, alkoxy groups such as methoxy, ethoxy, n-propoxy and methoxyethoxy groups; alcoxy groups such as acetoxy, propionoxy and 2-ethylhexanoxy groups; N-organo-amido groups such as N-methylacetamido, N-ethylacetamido and N-methylpropioamide groups; ketoxime groups such as methyl ethyl ketoxime and diethyl ketoxime groups; and alkenyloxy groups such as isopropenyloxy, 1-phenyl-1-ethenyloxy and isobutenyloxy groups.

From the viewpoint of the adhesion improvement, it is preferred that at least 3 silicon atombonded hydrolyzable groups are present in a molecule. From the same viewpoint as above, preferred hydrolyzable groups are alkoxy groups such as methoxy and ethoxy groups; acyloxy groups such as acetoxy group; and ketoxime groups such as methyl ethyl ketoxime group.

The component (d) may contain, in addition to the hydrolyzable group, an organic group such as an alkyl, aryl, halogenated alkyl, acryloxyalkyl, methacryloxyalkyl or glycidyloxyalkyl group. The organosilicon compounds (d) include, for example, silane and polysiloxanes. The polysiloxane may be a polymer of at least two monomeric units. The molecular shape of the component (d) may be any of linear, branched linear, cyclic, reticulate and three-dimensional shapes. The component (d) is preferably a silane or a polysiloxane having a low degree of polymerization.

The organosilicon compounds include, for example, methyltriethoxysilane, n-propyltri-(methoxyethoxy)silane, phenyltrimethoxysilane, methylphenyldimethoxysilane, γ-methacryloxypropyltrimethoxysilane, γ-glycidyloxypropyltriethoxysilane, 3,3,3-trifluoropropyltriethoxysilane and partial hydrolyzates of these silanes; (methoxyethoxy) o-silicate; dimethylpolysiloxane of a low degree of polymerization both ends of which are blocked with methyldiethoxysilyl groups; and compounds obtained by replacing part or the whole of the alkoxy groups of the above-mentioned organosilicon compounds with acetoxy, methyl ethyl ketoxime, N-methylacetamido or isoporopenyloxy group.

The organosilicon compound (e) having at least one silicon atom-bonded hydrolyzable group in the molecule has the same effects as those of the component (d). The compounds (e) include those listed above with reference to the component (d) and, in addition, organosilicon compounds containing a silicon atom-bonded alkenyl group or a silicon atom-bonded hydrogen atom.

The silicon atom-bonded alkenyl groups include those listed above with reference to the component (a).

The components (e) include, in addition to those listed above with reference to the component (d), vinyltrimethoxysilane, allyltriethoxysilane, methylvinyldiethoxysilane, vinyltri-(methoxyethoxy)-silane, partial hydrolyzates of these silanes, dimethylpolyxiloxane having a low degree of polymerization and terminated with vinyldimethoxysilyl groups at both ends, and compounds obtained by replacing part or the whole alkoxy groups of the above-mentioned organosilicon compounds with acetoxy, methyl ethyl ketoxime, N-methylacetamido or isopropenyloxy group.

The component (d) is used in such an amount that 0.05 to 20 wt.% of the silicon atom-bonded hydrolyzable groups would be contained in the cured product.

The component (e) is applied to the cured product comprising the components (a) to (c) by coating or impregnation and, therefore, it is not distributed uniformly but present only locally in many cases. The component (e) is used in such an amount that the silicon atom-bonded hydrolyzable group would be contained in an amount of 0.05 to 20 wt.% on an average in said cured product.

The cured product in which the silicon atom-bonded hydrolyzable group is contained in the polysiloxane constituting the cured product (type B) is obtained by a process wherein a composition comprising the above-mentioned components (a) to (c) and an organosilicon compounds (f) having at least one silicon atom-bonded hydrolyzable group and at least one silicon atom-bonded alkenyl group or silicon atom-bonded hydrogen atom, in the molecule is left to stand at room temperature or heated to cure the composition, or by a process wherein a composition comprising an organopolysiloxane (a') having at least two silicon atom-bonded alkenyl groups and at least one silicon atom-bonded hydrolyzable group in the molecule, an organopolysiloxane (b) having at least two silicon atom-bonded hydrogen atoms in the molecule and the component (c) is left to stand at room temperature or heated to cure the same, or by a process wherein a composition comprising an organopolysiloxane (a) having at least two silicon atom-bonded alkenyl groups in the molecule, an organopolysiloxane (b') having at least two silicon atom-bonded hydrogen atoms and at least one silicon atom-bonded hydrolyzable group in the molecule and the component (c) is left to stand at room temperature or heated to cure the same or a process wherein a composition comprising the components (a'), (b') and (c) is left to stand at room temperature or heated to cure the same.

The same component (a') is essentially the same as the component (a) except that the former has at least one silicon atom-bonded hydrolyzable group in the molecule. The above-mentioned details of the component (a) may be applied also to the component (a').

The component (b') is essentially the same as the component (b) except that the former has at least one silicon atom-bonded hydrolyzable group in the molecule. The above-mentioned details of the component (b) may be applied also to the component (b').

It is preferred that both components (a') and (b') have at least three silicon atom-bonded hydrolyzable groups in the respective molecules. The hydrolyzable groups are similar to those listed above with reference to the component (d).

Each of the components constituting the cured product may be either alone or in the form of a mixture of two or more compounds. The composition may contain, in addition to the above-mentioned indispensable components, a filler or a pigment such as fumed silica, precipitated silica, fine quartz powder, diatomaceous earth, talc, aluminum silicate, zirconium siicate, alumina, calcium carbonate, zinc oxide, titanium dioxide, ferric oxide or glass fibers; an addition reaction retardant such as benzotriazole, dimethyl sulfoxide or an alkyne alcohol; a flame retardancy-improver such as carbon black, fumed titanium dioxide or manganese carbonate; a heat stabilizer such as ceramium oxide; a pigment other than those listed above; and an organic solvent.

The composition comprising the above-mentioned indispensable components and the additional components used if necessary is cured by leaving them to stand at room temperature or under heating. Thus, the cured product is obtained which is in the form of a gel-like, rubbery or rigid resin depending on varieties of the components and the proportion of them. To obtain the cured product having an excellent adhesion, it is preferred to cure the silicone to obtain a rubbery product having a hardness of up to 20 as determine by means of a hardness tester according to a specification of JIS K 6301, to cure the silicone at a temperature of room temperature to 200°C in a moisture-free atmosphere such as dry air or dry nitrogen in a short time or to cure the silicone at room temperature to 200°C in a closed vessel in a short time.

The composition comprising the indispensable components and, if necesssary, the additional components is cured generally while it is in contact with another material. The curing may be effected by, for example, a process wherein the composition is cured on a material having an excellent releasing property or a material having substantially no releasing property in an open system, or by a process wherein the composition is cured in a mold having an excellent releasing property in an open system, a process wherein the composition interposed between materials having an excellent releasing property is cured, or by a process wherein the composition interposed between a material having an excellent releasing property and a material having substantially no releasing property is cured, or by a process wherein the composition is cured in a mold having an excellent releasing property and sealed with a material having an excellent releasing property.

The starting materials used for preparing the materials or molds having an excellent releasing property include, for example, fluororesins such as tetrafluoroethylene resin and vinylidene fluoride resin, polyethylene resin, polypropylene resin, methacrylic resin, polycarbonate resin, stainless steel and acetylcellulose. These materials may be in the form of, for example, sheets, films, woven fabrics and plates.

The starting materials used for preparing the materials for molds having substantially no releasing property include, for example, plastics such as polyimide resin, polyester resin, expoxy resin, urethane resin and polyphenylene resin; iron, nickel, copper, aluminum, zinc, chromium, copbalt an alloys of these metals as well as these metals having an oxide film on the surface thereof; glass and ceramics; and woods and papers. Thus laminates of the cured silicone with another material having no releasing property may be prepared. These materials may be in the form of, for example, sheets, films, oven fabrics and plates, more specifically heat resistant sheets or films. Preferably the cured silicone is in the form of a sheet or film one surface of which is laminated with the heat-resistant sheet or film having no releasing property. Furthermore, the other surface of the cured silicone sheet or film may be coated with a releasing sheet or film and the laminate may be bonded with a solid substance after the releasing sheet or film has been peeled off.

Alternatively the cured silicone is in the form of a sheet or film, one or both surfaces of which is (are) coated with a releasing sheet or film, and the cured silicone is contacted with a solid substance after at least one of the releasing sheets or films has been peeled off.

The other material having an excellent releasing property may be peeled off from the resulting cured product, if necesssary. Alternatively, the resulting cured product is taken out of the mold. The cured product or the laminate thereof with another material is used as it is or after cutting or punching the same to obtain pieces having a suitable shape and size. The cured silicone part of the product is adhered to a specified part or the whole surface of a solid substance or, alternatively, it is interposed between two solid substances. They are maintained at a temperature of at least room temperature, preferably 40 to 200°C under pressure to obtain a bonded composite comprising the cured product of the addition reaction-cured silicone or a bonded composite comprising the laminate of the cured product and the other material firmly bonded with the solid substance in one body. The time preferred for realizing the firm adhesion is at least one hour at 50°C, at least 10 min at 100°C and at least 5 min at 200°C.

The solid substances include those having a given shape made of metals such as iron, titanium, nickel, copper, aluminum, zinc, tin, chromium, or cobalt, alloys of them and these materials having an oxide film on the surface thereof; glasses; stones; ceramics such as earthenware; porcelain and new ceramics; silicon and germanium; plastics such as epoxy, polyester, unsaturated polyester, polyamide, polyimide, urethane, melamine, acrylic, urea, silicone, polyphenylene oxide and polyphenylene sulfide resins; rubbers; woods; and papers. They may be used either alone or in the form of a composite material of them. The shape of them may be any of sheets, films, woven fabrics, plates, filaments, rods, tubes, spheres, boxes and cubes. The solid substance may be a single substance or a part of machines, devices, jigs, electric appliances, electronic appliances, electric parts, electronic parts, automobiles, aircrafts, rockets, vehicles, ships, communication apparatuses, measuring instruments, cables, robots, facilities and buildings.

According to the present invention, the following effects can be obtained:

(1) The cured silicone product can be bonded to the solid substance without using any liquid, curable adhesive to be interposed between them.

(2) Only that part which is to be coated with the cured silicone substance by adhesion can be coated accurately and easily.

(3) Since the cured silicone product is used, the surroundings of the coated part are not stained by an organopolysiloxane having a low degree of polymerization

(4) Since the cured silicone product is used, even a perpendicular or suspended part can be coated if it is fixed with an adhesive tape or the like.

In the bonded composite prepared by the process of the present invention, only that part which is to be coated is coated with the cured product of the addition reaction-curable silicone or with a laminate of the cured product and another material and the surroundings are not stained. Thus, the present invention ralizes an improved capacity and the uses of the product are further broadened.

The following examples will further illustrate the present invention. In the examples, parts and percentages are given by weight and the viscosities are those determined at 25°C unless otherwise stated.

Example 1

97 parts of dimethylpolysiloxane (a) having dimethylvinylsilyl groups at both ends and a viscosity of 2000 CS (mm$^2$/S) was mixed thoroughly with 2 parts of methylhydrogenpolysiloxane (b) having trimethylsilyl groups at both ends and a viscosity of 10 CS (mm$^2$/S), 3 parts of vinyltrimethoxysilane (f) and 5 ppm (in terms of platinum), based on the total amount, of a solution of chloroplatinic acid in ethanol. The value of [equivalents of silicon atom-bonded hydrogen atoms in component (b)]/[equivalents of silicon atom-bonded vinyl groups in component (a)] was 2.5/1. The mixture was poured into a tetrafluoroethylene resin mold to a thickness of 7 mm and then cured to form a rubbery product by leaving it to stand in dry air in an oven of open system at 100°C for 5 min. The product was taken out of the oven and left to cool to room temperature. The cured silicon rubber was taken out of the mold and its hardness was measured with a hardness meter for rubber according to the specification JIS K 6301. The hardness was 5.

The cured silicone rubber was closely contacted with a surface of a flat glass.and left to stand in an oven at 100°C for 30 min to obtain a bonded composite comprising the cured silicone rubber firmly bonded with the flat glass. The hardness of the silicone rubber part of the bonded composite was measured with a hardness meter for rubber to reveal that it was 5. Thus, the hardness was invariable. The bonded composite was subjected to an adhesive joint failure test. A cohesive failure was observed in all the cases. For comparison a cured silicone rubber was prepared in the same manner as above except that no vinyltrimethoxysilane was used. The comparative, cured silicone rubber peeled off from the surface of the flat glass and, therefore, no bonded composite could be obtained.

Example 2

95 parts of methyl(3,3,3-trifluoropropyl)polysiloxane (a) having dimethylvinylsilyl groups at both ends thereof and a viscosity of 3,000 CS (mm$^2$/Sg) was mixed with 5 parts of methylhydrogenpolysiloxane having dimethyl(3,3,3-trifluoropropyl)silyl groups at both ends of the viscosity of 20 CS (mm$^2$/S), 2 parts of hydrogentrimethoxysilane (f) [HSi(OCH$_3$)$_3$], 5 ppm (in terms of platinum), based on the metal amount, of vinylsiloxane complex salt of chloroplatinic acid (c) and 0.1 parts of tetramethyltetravinylcyclotetrasiloxane (a). The value of [equivalents of silicon atom-bonded hydrogen atoms in component (b)] / [equivalents of silicon atom-bonded vinyl groups in component (a)] was 3/1. The mixture was poured into a polyethylene resin frame on a polyethylene film to a thickness of 6 mm and left to stand in an open system in an oven filled with dry nitrogen at 100°C for 10 min to cure the same into a rubbery product. The cured silicone rubber was taken out of the oven and left to cool to room temperature. The hardness of this product measured in the same manner as in Example 1 was 8. The cured silicone rubber was closely contacted with a surface of copper or aluminum plate and left to stand in an oven at 50°C for 16 h and then taken out to obtain a bonded composite comprising the cured silicone rubber firmly bonded with the copper or aluminum plate. The bonded composite was left to cool to room temperature and the hardness of the silicone rubber part thereof was measured. The hardness was 8 in both cases. Thus, the hardness was invariable by this treatment. The bonded composite was subjected to an adhesive joint failure test. A cohesive failure was observed in both cases. For comparison, a cured silicone rubber was prepared in the same manner as above except that no hydrogentrimethoxysilane was used. The comparative, cured silicone rubber peeled off from the surface in both cases and, therefore, excellent bonded composite could not be obtained.

Example 3

95 parts of dimethylsiloxane/methylphenylsiloxane copolymer (a) (molar ratio of the dimethylsiloxane units to the methylphenylsiloxane units = 90:10) having methylphenylvinylsilyl groups at both ends and a viscosity of 9,000 CS (mm$^2$/S) was mixed with 5 parts of dimethylsiloxane/methylhydrogensiloxane copolymer (b) (molar ratio of the dimethylsiloxane units to the methylhydrogensiloxane units = 50:50) having dimethylphenylsilyl groups at both ends and a viscosity of 20 CS (mm$^2$/S), 4 parts of allyltrimethoxysilane (f), 5 ppm (in terms of platinum), based on the total weight, of vinylsiloxane complex salt of chloroplatinic acid (c) and 0.1 part of phenylbutynol. The mixture was poured into a tetrafluoroethylene resin frame placed in a tetrafluoroethylene resin film to a thickness of 3 mm. The surface of the poured mixture was covered with a tetrafluoroethylene resin film of a thickness of 10 μm and then left to stand in an oven at 100°C for 10 min to cure the same into a rubbery product. The cured product was taken out of the oven and left to cool to room temperature. The tetrafluoroethylene resin film and tetrafluoroethylene resin frame were removed and the hardness of the cured silicone rubber was measured in the same manner as in Example 1. The hardness was 5. The cured silicone rubber was interposed between two ceramic plates or between two epoxy resin FRP plates. They were pressed lightly, left to stand, in an oven at 100°C for 60 min and taken out. Thus, a bonded composite comprising the cured silicone rubber interposed between two epoxy resin FRP plates and firmly bonded with them was obtained.

The two plates constituting the resulting bonded composite were pulled in adverse directions from each other at an angle of 180°C. The silicone rubber part of the composite was broken. Namely, cohesive failure occurred.

Example 4

65 parts of dimethylpolysiloxane (a) having dimethylvinylsilyl groups at both ends and a viscosity of 2,000 CS (mm²/S) was mixed with 35 parts of a copolymer (containing 2.5% of vinyl group) comprising $SiO_2$ units, $Me_3SiO_{0.5}$ units and $Me_2ViSiO_{0.5}$ units in which Me represents a methyl group and Vi represents a vinyl group. 95 parts of the resulting mixture was mixed with 5 parts of methylhydrogensiloxane (b) having trimethylsilyl groups at both ends and a viscosity of 30 CS (mm²/S), 2.0 parts of vinyltriacetoxysilane (f) and 5 ppm (in terms of platinum), based on the total weight, of vinylsiloxane complex salt of chloroplatinic acid (c). The value of [equivalents of silicon atom-bonded hydrogen atoms in component (b)] / [equivalents of silicon atom-bonded vinyl groups in component (a)] was 2/1. The mixture was laminated with a polypropylene film and a polyimide film in such a manner that the thickness of the silicone layer would be 0.10 mm. The laminate was cured by leaving it to stand in an oven at 100°C for 10 min. The laminate was taken out of the oven and left to cool to room temperature. The polypropylene film was peeled off. The cured silicone rubber bonded with the polyimide film was skived and its hardness was measured in the same manner as in Example 1. The hardness was 10. The silicone rubber part of the laminate comprising the cured silicone rubber and the polyimide film was closely contacted with a nickel plate and left to stand in an oven at 100°C for 30 min to obtain a bonded composite comprising the cured silicone rubber interposed between the polyimide film and the nickel plate and firmly bonded with them.

Example 5

80 parts of dimethylpolysiloxane (a) having dimethylallylsilyl groups at both ends and a viscosity of 12,000 CS (mm²/S) was mixed with 20 parts of fumed silica (specific surface area: 200 mm²/g) the surface of which had been made hydrophobic by a treatment with trimethylsilyl groups by means of a kneader mixer. 95 parts of the resulting mixture was mixed with 5 parts of methylhydrogenpolysiloxane (b) having trimethylsilyl groups at both ends and a viscosity of 10 CS (mm²/S), 5 ppm (in terms of platinum), based on the total weight, of vinylsiloxane complex salt of chloroplatinic acid (c) and 1 part of vinyltris(methyl ethyl ketoxime)silane (f). The mixture was poured in a fluororesin mold to a thickness of 5 mm and then cured by leaving it in an oven filled with dry air in an open system at 150°C for 20 min to obtain a rubbery product. The product was taken out of the oven and left to cool to room temperature. The cured silicone rubber was taken out of the mold and its hardness was measured in the same manner as in Example 1. The hardness was 15. The cured silicone rubber was closely contacted with a glass plate and a ceramic plate and left to stand in an oven at 150°C for 60 min. The cured silicone rubber was firmly bonded with both plates. The hardness of the silicone rubber part was measured again. The hardness was 15 and thus it was invariable. For comparison, a cured silicone rubber was prepared under the same conditions as above except that no vinyltris(methyl ethyl ketoxime)silane was used. This comparative product could not be bonded with the glass plate or ceramic plate.

Example 6

A cured silicone rubber and then a bonded composite thereof were prepared in the same manner as in Example 3 except that the allyltrimethoxysilane (f) was replaced with γ-methacryloxypropyltriethoxysilane (d) and the ceramic plate and the epoxy resin FRP plate were replaced with a quartz glass plate and an unsaturated polyester resing FRP plate, respectively. The hardness of the cured silicone rubber was 6. The cured silicone rubber was firmly bonded with a quartz glass plate and the unsaturated polyester resin FRP plate.

Example 7

A cured silicone rubber and then a bonded composite thereof were prepared in the same manner as in Example 5 except that the vinyltris-(methyl ethyl ketoxime)silane (f) was replaced with diethoxydi(methyl ethyl ketoxime) silane (d) and the glass plate was replaced with a steel plate. The hardness of the cured silicone rubber was 16. The cured silicone rubber was firmly bonded with the steel plate and the ceramic plate.

Example 8

A laminate comprising a silicone layer having a thickness of 1 mm and interposed between two polypropylene films was prepared in the same manner as in Example 4 except that the vinyltriacetoxysilane (f) was replaced with a partial hydrolyzate of vinyltrimethoxysilane (f) (methoxy group content: 26%) and the polyimide film was replaced with a polypropylene film. The laminate was left to stand in an oven at 100°C for 10 min to effect the curing. The product was taken out of the oven and left to cool to room temperature. The two polypropylene films were peeled off and the hardness of the cured silicone rubber was measured in the same manner as in Example 1. The hardness was 8. The cured silicone was interposed between a glass plate and a copper plate and left to stand in an oven at 100°C for 30 min to obtain a bonded composite comprising the cured silicone rubber firmly bonded with the glass plate and the copper plate.

### Example 9

93 parts of dimethylpolysiloxane (a) having dimethylvinylsilyl groups at both ends and a viscosity of 6,000 CS ($mm^2$/S) was mixed with 7 parts of methylhydrogensiloxane/methyl(γ-trimethoxysilylpropyl)siloxane copolymer (b) [ratio of methylhydrogensiloxane units to methyl(γ-trimoethoxysilylpropyl)siloxane units = 2/1] having trimethylsilyl groups at both ends and a viscosity of 50 CS ($mm^2$/S) and 2 ppm (in terms of platinum), based on the total weight, of vinylsiloxane complex salt of chloroplatinic acid (c). A laminate was prepared from this mixture and a polyvinyldene fluoride film and a polypropylene film both surface-treated so as to improve the adhesion while the thickness of the silicone layer was controlled to 0.20 mm. The laminate was left to stand in an oven at 100°C for 10 min to effect the curing. The product was taken out of the oven and left to cool to room temperature. The polypropylene film was peeled off. The cured silicone bonded with the polyvinyldene fluoride film was closely contacted with a silicon wafer and left to stand in an oven at 100°C for 30 min to obtain a bonded composite comprising the cured silicone rubber interposed between the polyvinylidene fluoride film and the silicon wafer and firmly bonded with them.

### Example 10

97 parts of dimethylsiloxane/methyl(β-trimethoxysilylethyl)siloxane copolymer (a) [ratio of dimethylsiloxane units to methyl (β-trimethoxysilylethyl)siloxane units = 95/5] having dimethylvinyl groups at both ends and a viscosity of 500 CS ($mm^2$/S) was mixed with 3 parts of methylhydrogensiloxane (b) having trimethylsilyl groups at both ends and a viscosity of 20 CS ($mm^2$/S) and 3 ppm (in terms of platinum), based on the total weight, of vinylsiloxane complex salt of chloroplatinic acid (c). A glass cloth was impregnated with the mixture to a thickness of 1 mm to form a coating. Polypropylene films were applied to both surfaces of the coated cloth to form a laminate. The laminate was left to stand in an oven at 100°C for 10 min to cure the same. The laminate was taken out of the oven and left to cool to room temperature. The polypropylene films were removed by peeling from both surfaces of the coat glass cloth. The glass cloth was closely contacted with an aluminum foil having a thickness of 0.5 mm and left to stand in an oven at 190°C for 15 min to obtain a composite comprising the cured silicone rubber firmly bonded with the aluminum foil.

### Example 11

97 parts of dimethylpolysiloxane (a) having dimethylvinylsilyl groups at both ends and a viscosity of 2,000 CS ($mm^2$/S) was mixed with 3 parts of methylhydrogenpolysiloxane (b) having trimethylsilyl groups at both ends and 2 ppm (in terms of platinum), based on the total weight, of vinylsiloxane complex salt of chloroplatinic acid (c). The mixture was poured into a mold having a thickness of 1 mm and left to stand in an oven at 100°C for 20 min to obtain a cured silicone rubber sheet. The sheet was cooled to room temperature. Ethyl polysilicate (e) (silicon atom-bonded ethoxy group content: 0.2%) was applied to the surface of the sheet and the sheet was left to stand at room temperature for 10 min. The ethyl silicate-coated surface of the sheet was closely contacted with the surface of a glass and left to stand in an oven at 100°C for 30 min to obtain a composite comprising a firmly bonded silicone rubber sheet and glass.

According to the process of the present invention, a bonded composite of a cured product of an addition reaction-curable silicone and a solid substance can be produced easily and surely with a high precision. Therefore, according to the process of the invention, qualities of various products coated with a cured silicone can be improved and the uses of them can be broadened.

### Claims

1. A process for producing a bonded composite of a cured silicone and a solid substance characterized in that a cured product obtained by curing an addition reaction-curable organopolysiloxane containing 0.05 to 20 wt.% based on the cured product of a silicon atom-bonded hydrolyzable group is kept in contact with the solid substance at room temperature or a higher temperature.

2. A process according to Claim 1 wherein said silicon atom-bonded hydrolyzable group is contained in an organosilicon compound contained in free form in said cured product of an addition reaction-curable silicone.

3. A process according to Claim 1 wherein said silicon atom-bonded hydrolyzable group is contained in a polysiloxane constituting said cured product of an addition reaction-curable silicone

4. A process according to Claim 1 wherein said cured silicone is a rubbery substance having a hardness of up to 20 (according to JIS K6301).

5. A process according to Claim 1 wherein said higher temperature ranges from 40 to 200°C.

6. A process according to Claim 1 wherein said cured silicone is a laminate thereof with another material having no releasing property.

7. A process according to Claim 6 wherein said another material is in the form of a heat-resistant sheet or film.

8. A process according to Claim 7 wherein said cured silicone is in the form of a sheet or film and one surface of the sheet or film is laminated with a heat-resistant sheet or film having no releasing property.

9. A process according to Claim 8 wherein said cured silicone is in the form of a sheet or film, one surface of which is laminated with a heat-resistant sheet or film having no releasing property and the other surface of which is coated with a releasing sheet or film, and the laminate is bonded with a solid substance after the releasing sheet or film has been peeled off.

10. A process according to Claim 1 wherein said cured silicone is in the form of a sheet or film one or both surfaces of which is (are) coated with a releasing sheet or film, and said cured silicone is contacted with a solid substance after at least one of said releasing sheet(s) or film(s) has (have) been peeled off.

**Patentansprüche**

1. Verfahren zur Herstellung eines verbundenen Schichtkörpers aus einem gehärteten Silikon und einer festen Substanz, dadurch gekennzeichnet, daß ein gehärtetes Produkt, erhalted durch Härten eines durch eine Additionsreaktion härtbaren Organopolysiloxans, das 0,05 bis 20 Gew.-%, bezogen auf das gehärtete Produkt einer siliziumatomgebundenen, hydrolysierbaren Gruppe enthält, in Kontakt mit der festen Substanz bei Raumtemperatur oder erhöhoter Temperatur gehalten wird.

2. Verfahren nach Anspruch 1, bei dem die siliziumatomgebundene, hydrolysierbare Gruppe in einer Organosiliziumverbindung enthalten ist, die in freier Form in gehärteten Produkt eines durch eine Additionsreaktion härtbaren Silikons enthalten ist.

3. Verfahren nach Anspruch 1, bei dem die siliziumatomgegundene, hydrolysierbare Gruppe in einem Polysiloxan enthalten ist, das das gehärtete Produkt eines durch eine Additionsreaktion härtbaren Silikons bildet.

4. Verhfahren nach Anspruch 1, bei dem das gehärtete Silikon eine gummiartige Substanz mit einer Härte von bis zu 20 (entsprechend JIS K6301) ist.

5. Verfahren nach Anspruch 1, bei dem die höhere Temperatur von 40 bis 200°C reicht.

6. Verfahren nach Anspruch 1, bei dem das gehärtete Silikon ein Laminat mit einem anderen Material ist, das keine Entformungseigenschaften besitzt.

7. Verfahren nach Anspruch 6, bei dem das andere Material in Form, einer wärmeresistenten Folie oder eines Films vorliegt.

8. Verfahren nach Anspruch 7, bei dem das gehärtete Silkon in Form einer Folie oder eines Films vorliegt und eine Oberfläche davon mit einer wärmeresistenten Folie oder einem Film ohne Entformungseigenschaften laminiert ist.

9. Verfahren nach Anspruch 8, bei dem das gehärtete Silikon in Form einer Folie oder eines Films vorliegt, dessen eine Oberfläche mit einer wärmeresistenten Folie oder einem Film ohne Entformungseigenschaften laminiert ist und dessen andere Oberfläche mit einer Folie oder Film mit Entformungseigenschaften beschichtet ist, und das Laminat mit einer festen Substanz verbunden wird, nachdem die Folie oder der Film mit Entformungseigenschaften abgezogen wurde.

10. Verfahren nach Anspruch 1, bei dem das gehärtete Silkon in Form einer Folie oder eines Films vorliegt, dessen eine oder beide Oberflächen mit einer Folie oder einem Film mit Entformungseigenschaften beschichtet ist/sind, und das gehärtete Silkon mit einer festen Substanz in Kontakt gebracht wird, nachdem mindestens ein(e) der Folie/n oder Film/e mit Entformungseigenschaften abgezogen wurde.

**Revendications**

1. Procédé pour produire un composite lié d'un silicone durci et d'une substance solide, caractérisé en ce qu'un produit durci obtenu par durcissement d'un organopolysiloxane d'addition durcissable par réaction, contenant de 0,05 à 20% en poids sur la base du produit durci d'un groupe hydrolysable lié par atome de silicium est maintenu en contact avec la substance solide à la température ambiante ou à une température plus élevée.

2. Procédé selon la revendication 1, dans lequel le groupe hydrolysable lié par atome de silicium est contenu dans un composé d'organosilcium contenu sous forme libre dans le produit durci d'une silicone d'addition durcissable par réaction.

3. Procédé selon la revendication 1, dans lequel le groupe hydrosylable lié par atome de silicium est contenu dansun polysiloxane constituant le produit durci d'un silicone d'addition durcissable par réaction.

4. Procédé selon la revendication 1, dans lequel le silicone durci est une substance caoutchouteuse ayant une dureté atteignant 20 (selon JIS K6301).

5. Procédé selon la revendication 1, dans lequel la température plus élevée est comprise entre 40 et 200°C.

6. Procédé selon la revendication 1, dans lequel le silicone durci est un stratifié de celui-ci avec un autre matériau n'ayant aucune propriété de dégagement.

7. Procédé selon la revendication 6, dans lequel l'autre matériau se présente sous la forme d'une feuille ou d'une pellicule résistant à la chaleur.

8. Procédé selon la revendication 7, dans lequel le silicone durci se présente sous la forme d'une feuille ou d'une pellicule et une surface de la feuille ou de la pellicule est laminée avec une feuille ou une pellicule résistant à la chaleur n'ayant aucune propriété de dégagement.

9. Procédé selon la revendication 8, dans lequel le silicone durci se présente sous la forme d'une feuille ou d'une pellicule, dont une surface est laminée avec une feuille ou une pellicule résistant à la chaleur et ne présente aucune propriété de dégagement et dont l'autre surface est revêtue d'une feuille ou d'une pellicule de dégagement, et la stratifié est lié à une substance solide après détachement de la feuille ou de la pellicule de dégagement.

10. Procédé selon la revendication 1, dans lequel le silicone durci se présente sous la forme d'une feuille ou d'une pellicule, dont une surface our les deux surfaces est (sont) revêtue(s) d'une feuille ou d'une pellicule de dégagement, et le silicone durci est mis en contact avec une substance solide après détachement d'au moins une des feuilles ou pellicules de dégagement.